(19) 〔Europäisches Patentamt / European Patent Office / Office européen des brevets〕

(11) **EP 4 290 467 A1**

(12) **EUROPEAN PATENT APPLICATION**
published in accordance with Art. 153(4) EPC

(43) Date of publication:
**13.12.2023 Bulletin 2023/50**

(21) Application number: **22908817.4**

(22) Date of filing: **09.12.2022**

(51) International Patent Classification (IPC):
***G06T 17/00*** (2006.01)

(86) International application number:
**PCT/CN2022/137936**

(87) International publication number:
**WO 2023/207123 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210455299**

(71) Applicant: **Beijing Chusudu Technology Co., Ltd. Beijing 100083 (CN)**

(72) Inventors:
• **LI, Jianglong**
  **Beijing 100083 (CN)**
• **LUO, Jinhui**
  **Beijing 100083 (CN)**
• **SHAN, Le**
  **Beijing 100083 (CN)**

(74) Representative: **Vitina, Maruta et al**
  **Agency TRIA ROBIT**
  **P.O. Box 22**
  **1010 Riga (LV)**

(54) **POINT CLOUD DATA LAYERING METHOD AND APPARATUS, AND DEVICE, MEDIUM AND VEHICLE**

(57) The embodiments of the present invention disclose a layering method and apparatus for point cloud data, a device, a medium and a vehicle, where the layering method includes: determining, for various frames of point cloud data corresponding to a to-be-processed trajectory, vehicle pitch angles relative to a horizontal plane in the case of a target vehicle collecting the various frames of point cloud data; dividing the to-be-processed trajectory into a ramp region and a non-ramp region according to a size relationship between the vehicle pitch angles corresponding to the various frames of point cloud data; and layering the non-ramp region according to height information. By using the above technical solution, the problem of dividing the point cloud data at different layers into the point cloud data in a same layer is solved; and the accuracy of a layering result of the point cloud data is improved.

```
┌─────────────────────────────────────────────────┐
│ Determine, for various frames of point cloud     │ S110
│ data corresponding to a to-be-processed          │
│ trajectory, vehicle pitch angles relative to a   │
│ horizontal plane in the case of a target vehicle │
│ collecting the various frames of point cloud data│
└─────────────────────────────────────────────────┘
                        │
                        ▼
┌─────────────────────────────────────────────────┐
│ Divide the to-be-processed trajectory into a     │ S120
│ ramp region and a non-ramp region according to a │
│ size relationship between the vehicle pitch      │
│ angles corresponding to the various frames of    │
│ point cloud data                                 │
└─────────────────────────────────────────────────┘
                        │
                        ▼
┌─────────────────────────────────────────────────┐
│ Layer the non-ramp region according to height    │ S130
│ information                                       │
└─────────────────────────────────────────────────┘
```

**FIG. 1a**

EP 4 290 467 A1

**Description**

TECHNICAL FIELD

The embodiments of the present invention relate to the technical field of automatic driving, and in particular to a layering method and apparatus for point cloud data, a device, a medium and a vehicle.

Background

When a high-definition map for assisting a vehicle positioning technology is made, particularly in a scene of a parking lot (especially, an underground parking lot), there is a need for layering three-dimensional point cloud data collected during vehicle driving to obtain point cloud data at different layer heights, so that a corresponding high-definition map is made corresponding to the point cloud data at each layer height.

In the related art, plane fitting and division on a vehicle driving trajectory are mainly performed, and each plane is found out to serve as one layer. However, as one layer is not in one plane often in the scene of the underground parking lot, an elevated bridge or the like, in the above solution, wrong layering is prone to occurring, so as to affect making of subsequent high-definition maps.

SUMMARY

The embodiments of the present invention provide a layering method and apparatus for point cloud data, a device, a medium and a vehicle for overcoming the problem of inaccurately layering the point cloud data.

The specific solutions are as follows:

In a first aspect, an embodiment of the present invention provides a layering method for point cloud data, the layering method including:

determining, for various frames of point cloud data corresponding to a to-be-processed trajectory, vehicle pitch angles relative to a horizontal plane in the case of a target vehicle collecting the various frames of point cloud data;
dividing the to-be-processed trajectory into a ramp region and a non-ramp region according to a size relationship between the vehicle pitch angles corresponding to the various frames of point cloud data; and
layering the non-ramp region according to height information.

It can be known from the above solution, compared with a manner in the related art of layering the point cloud data through plane fitting and division on the to-be-processed trajectory, considering a difference between vehicle attitudes in the case of a vehicle driving on a ramp pavement and a non-ramp pavement, the embodiment of the present invention divides a vehicle driving trajectory into the ramp region and the non-ramp region by determining pitch angles for characterizing the vehicle attitudes according to different vehicle pitch angles in the case of the vehicle driving on the ramp pavement and the non-ramp pavement, and then layers the non-ramp region, thereby solving the problem of dividing the point cloud data at different layers into the point cloud data in a same layer, improving the accuracy of a layering result of the point cloud data, and then facilitating an improvement on the making accuracy of subsequent high-definition maps.

Optionally, after the layering the non-ramp region according to height information, the method provided by the embodiment of the present invention further includes:

visually displaying the point cloud data in different layers according to a layering result of the non-ramp region, and generating planes corresponding to different layer heights for creating maps corresponding to the various planes.

It can be known from the above solution, the point cloud data in different layers may be visually displayed according to a layering result of the point cloud data, so that different operators make maps for different layers respectively, to improve the mapping efficiency. A created high-definition map may be applied to a positioning process of an autonomous vehicle, and may provide information about a number of layers of a pavement where the autonomous vehicle is currently located for the autonomous vehicle in a scene of the elevated bridge and the parking lot, particularly, the underground parking lot.

Optionally, the dividing the to-be-processed trajectory into a ramp region and a non-ramp region according to a size relationship between the vehicle pitch angles corresponding to the various frames of point cloud data includes:

making the point cloud data corresponding to those of the vehicle pitch angles larger than a preset angle in the various frames of point cloud data serve as first point cloud data of the target vehicle driving uphill or downhill; and
making a to-be-processed trajectory corresponding to a set of all the first point cloud data serve as the ramp region, and making a to-be-processed trajectory corresponding to a set of all second point cloud data in addition to the first point cloud data serve as the non-ramp region.

Optionally, the making a to-be-processed trajectory corresponding to a set of all the first point cloud data serve as the ramp region, and making a to-be-processed trajectory corresponding to a set of all second point cloud data in addition to the first point cloud data serve as the non-ramp region includes:

dividing, according to continuity between point cloud frame number index values, the point cloud frame number index values corresponding to all the first point cloud data into a plurality of first index value ranges, wherein the number of the first index value ranges is used for representing the number of times of the target vehicle driving uphill or downhill;

extending the first index value range by adding several index values at two ends of the index value range for arbitrary one first index value range, to obtain a target index value range with the extended range, and making to-be-processed trajectories corresponding to various target index value ranges serve as the ramp regions respectively; and

dividing, based on a plurality of target index value ranges corresponding to the first point cloud data and the continuity between the point cloud frame number index values, the point cloud frame number index values corresponding to the second point cloud data in addition to the first point cloud data into a plurality of second index value ranges, and making to-be-processed trajectories corresponding to various second index value ranges serve as the non-ramp regions respectively.

It can be known from the above solution, based on different vehicle pitch angles in the case of the vehicle driving in the ramp region and the non-ramp region, the embodiment of the present invention preliminarily divides the various frames of point cloud data into the first point cloud data corresponding to the ramp region and the second point cloud data corresponding to the non-ramp region according to a relationship between the vehicle pitch angle corresponding to each frame of point cloud data and a preset angle, where the ramp region may be represented by the first index value ranges corresponding to the first point cloud data. In the embodiment of the present invention, in order to make the various first index value ranges more comprehensively cover the point cloud data, each first index value range corresponding to the first point cloud data is extended, and then the point cloud frame data corresponding to the ramp region may be more accurately determined.

Optionally, the extending the first index value range by adding several index values at two ends of the index value range, to obtain a target index value range with the extended range includes:

extending the first index value range by adding index values according with monotonicity at two ends of the index value range respectively according to the monotonicity between height information, corresponding to various index values in the first index value range, of the target vehicle, to obtain the target index value range with the extended range, wherein the monotonicity includes a monotonously increasing character or a monotonously decreasing character.

Optionally, the extending the first index value range by adding index values according with monotonicity at two ends of the index value range respectively according to the monotonicity between height information, corresponding to various index values in the first index value range, of the target vehicle, to obtain the target index value range with the extended range includes:

determining an intermediate index value corresponding to a middle portion of a ramp in the first index value range; determining various height difference absolute values between height information, corresponding to the intermediate index value, of the target vehicle and height information, corresponding to the other index values in the first index value range, of the target vehicle;

determining to-be-added index values at the two ends of the first index value range according to the monotonously increasing character between the various height difference absolute values of the vehicle during ramp driving; and forming, by combining the to-be-added index values with the index values in the original first index value range, the target index value range with the extended range according to the size relationship between the index values.

It can be known from the above solution, in the embodiment of the present invention, according to the monotonously increasing character or the monotonously decreasing character of the height information of the target vehicle driving in the ramp region, after an intermediate index value corresponding to a middle portion of a ramp in the preliminarily divided first index value range corresponding to the ramp region is determined, the first index value range corresponding to the ramp region may be extended by determining other index values which have a difference of elevation, according with the monotonously increasing character, with height information of the intermediate index value. Therefore, the extended target index value range can correspond to one finished ramp region, and then the determining precision of the ramp region is effectively improved.

Optionally, each vehicle pitch angle is a filtered vehicle pitch angle.

It can be known from the above solution, in the embodiment of the present invention, by filtering the vehicle pitch angles, interference caused by a minor jitter of the vehicle during driving is solved; the accuracy of the vehicle pitch angles are improved; and then subsequent ramp regions and non-ramp regions are more accurately divided.

Optionally, the layering the non-ramp region according to height information includes:

determining sub-regions with same average height information in the non-ramp region, where a point cloud frame number corresponding to the each sub-region is consecutive; and

dividing the non-ramp region into a plurality of layers in an order of the average height information of different sub-regions from large to small.

It can be known from the above solution, considering that pavements at different heights communicate with each other through a ramp usually, the embodiment of the present invention determines the ramp region from the to-be-processed trajectory and then the residual region in the to-be-processed trajectory as the non-ramp region, and layer the non-ramp region into a plurality of layers based on the height in an order from large to small according to a height clustering algorithm. Compared with a manner in the related art of plane fitting and division on the to-be-processed trajectory, due to the situation that a pavement is not completely horizontal, so as to be easily fitted into a plurality of layers, the embodiment of the present invention does not focus on whether a pavement corresponding to the non-ramp region in each layer is horizontal in the layering process, and has no need for considering whether point cloud data in other planes is used during plane fitting either. Therefore, the point cloud data layering solution provided by the embodiment of the present invention effectively improves the accuracy of point cloud data layering.

Optionally, the determining vehicle pitch angles relative to a horizontal plane in the case of a target vehicle collecting the various frames of point cloud data includes:

determining, based on a relative relationship between a vehicle body coordinate system and a standard coordinate system, the vehicle pitch angles relative to a horizontal plane in the case of the target vehicle collecting the various frames of point cloud data, where the vehicle body coordinate system is a coordinate system fixedly connected with a vehicle body, and the standard coordinate system is a coordinate system corresponding to the horizontal plane; or

determining, based on data collected by an inertial measurement unit (IMU), the vehicle pitch angles relative to the horizontal plane in the case of the target vehicle collecting the various frames of point cloud data; or

determining, based on data fused by a plurality of sensors, the vehicle pitch angles relative to the horizontal plane in the case of the target vehicle collecting the various frames of point cloud data, where the plurality of sensors include the IMUs, global positioning systems (GPS), radars and/or image sensors.

In a second aspect, an embodiment of the present invention further provides a layering apparatus for point cloud data, the layering apparatus including:

a pitch angle determining module, configured to determine, for various frames of point cloud data corresponding to a to-be-processed trajectory, vehicle pitch angles relative to a horizontal plane in the case of a target vehicle collecting various frames of point cloud data, where the standard coordinate system is used for representing the horizontal plane;

a region dividing module, configured to divide the to-be-processed trajectory into a ramp region and a non-ramp region according to a size relationship between the vehicle pitch angles corresponding to the various frames of point cloud data; and

a layering module, configured to layer the non-ramp region according to height information.

Optionally, the apparatus provided by the embodiment of the present invention further includes:

a mapping module, configured to visually display the point cloud data in different layers according to a layering result of the non-ramp region after layering the non-ramp region according to the height information, and generating planes corresponding to different layer heights for creating maps corresponding to the various planes.

Optionally, the region dividing module includes:

a point cloud data dividing unit, configured to make the point cloud data corresponding to those of the vehicle pitch angles larger than a preset angle in the various frames of point cloud data serve as first point cloud data of the target vehicle driving uphill or downhill; and

a region dividing unit, configured to make a to-be-processed trajectory corresponding to a set of all the first point cloud data serve as the ramp region, and making a to-be-processed trajectory corresponding to a set of all second point cloud data in addition to the first point cloud data serve as the non-ramp region.

Optionally, the region dividing unit includes:

an index value range determining sub-unit, configured to divide, according to continuity between point cloud frame number index values, the point cloud frame number index values corresponding to all the first point cloud data into a plurality of first index value ranges, where the number of the first index value ranges is used for representing the number of times of the target vehicle driving uphill or downhill;

a ramp region determining sub-unit, configured to extend the first index value range by adding several index values at two ends of the index value range for arbitrary one first index value range, to obtain a target index value range with the extended range, and making to-be-processed trajectories corresponding to various target index value ranges serve as the ramp regions respectively; and

a non-ramp region determining sub-unit, configured to divide, based on a plurality of target index value ranges corresponding to the first point cloud data and the continuity between the point cloud data frame number index values, the point cloud frame number index values corresponding to the second point cloud data in addition to the first point cloud data into a plurality of second index value ranges, and make to-be-processed trajectories corresponding to various second index value ranges serve as the non-ramp regions respectively.

Optionally, the ramp region determining sub-unit includes:

a ramp region determining assembly, configured to extend the first index value range by adding index values according with monotonicity at two ends of the index value range respectively according to the monotonicity between height information, corresponding to various index values in the first index value range, of the target vehicle for arbitrary one first index value range, to obtain the target index value range with the extended range, and make to-be-processed trajectories corresponding to various target index value ranges serve as the ramp regions respectively, where the monotonicity includes a monotonously increasing character or a monotonously decreasing character.

Optionally, the ramp region determining assembly is specifically configured to:

determine, for arbitrary one first index value range, an intermediate index value corresponding to a middle portion of a ramp in the first index value range;

determine various height difference absolute values between height information, corresponding to the intermediate index values, of the target vehicle and height information, corresponding to the other index values in the first index value range, of the target vehicle;

determine to-be-added index values at the two ends of the first index value range according to the monotonously increasing character between the various height difference absolute values of the vehicle during ramp driving; and

form, by combining the to-be-added index values with the index values in the original first index value range, the target index value range with the extended range according to the size relationship between the index values, and make to-be-processed trajectories corresponding to various target index value ranges serve as the ramp regions respectively.

Optionally, each vehicle pitch angle is a filtered vehicle pitch angle.

Optionally, the layering module includes:

a sub-region determining unit, configured to determine sub-regions with same average height information in the non-ramp region, where point cloud frame number index values corresponding to the each sub-region are consecutive; and

a layering unit, configured to divide the non-ramp region into a plurality of layers in an order of the average height information of different sub-regions from large to small.

Optionally, the pitch angle determining module is configured to:

determine, based on a relative relationship between a vehicle body coordinate system and the standard coordinate system, the vehicle pitch angles relative to a horizontal plane in the case of the target vehicle collecting the various frames of point cloud data, where the vehicle body coordinate system is a coordinate system fixedly connected with a vehicle body, and the standard coordinate system is a coordinate system corresponding to the horizontal plane;

determine, based on data collected by an inertial measurement unit (IMU), the vehicle pitch angles relative to the horizontal plane in the case of the target vehicle collecting the various frames of point cloud data; or

determine, based on data fused by a plurality of sensors, the vehicle pitch angles relative to the horizontal plane in the case of the target vehicle collecting the various frames of point cloud data, where the plurality of sensors include the IMUs, global positioning systems (GPS), radars and/or image sensors.

In a third aspect, an embodiment of the present invention provides a storage medium, which stores a computer program thereon; and the program implements, when executed by a processor, the method according to any implementation mode of the first aspect.

In a fourth aspect, an embodiment of the present invention provides an electronic device, the electronic device including:

one or more processors; and
a storage device, configured to store one or more programs, where
the one or more programs, when executed by the one or more processors, enable the electronic device to implement the method according to any implementation mode of the first aspect.

In a fifth aspect, an embodiment of the present invention provides a vehicle which includes the apparatus according to any implementation mode of the second aspect, or includes the electronic device described in the fourth aspect.

In a sixth aspect, an embodiment of the present invention provides a computer program. The computer program includes program instructions which, when executed by a computer, the program instructions implement the method according to any implementation mode of the first aspect.

BRIEF DESCRIPTION OF DRAWINGS

In order to describe the technical solutions in the embodiments of the invention or the prior art more clearly, the following briefly introduces the accompanying drawings required for describing the embodiments or the prior art. Apparently, the accompanying drawings in the following description show only some embodiments of the invention, and those of ordinary skill in the art may still derive other drawings from these drawings without any creative efforts.

FIG. 1a is a flow chart of a layering method for point cloud data provided by embodiment 1 of the present invention;
FIG. 1b is a relationship schematic diagram between vehicle pitch angles and point cloud frame number index values provided by embodiment 1 of the present invention;
FIG. 1c is a lateral view of a basement trajectory provided by embodiment 1 of the present invention;
FIG. 2 is a flow chart of a layering method for point cloud data provided by embodiment 2 of the present invention;
FIG. 3 is a flow chart of a layering method for point cloud data provided by embodiment 3 of the present invention;
FIG. 4 is a structural block diagram of a layering apparatus for point cloud data provided by embodiment 4 of the present invention;
FIG. 5 is a structural block diagram of an electronic device provided by embodiment 5 of the present invention; and
Fig. 6 is a schematic diagram of a vehicle provided by embodiment 5 of the present invention.

DETAILED DESCRIPTION OF THE EMBODIMENTS

The technical solutions in the embodiments of the invention are clearly and completely described below in conjunction with the accompanying drawings in the embodiments of the invention. Apparently, the embodiments described are only a part rather than all of the embodiments of the invention. All other embodiments obtained by those of ordinary skills in the art without creative efforts on the basis of the embodiments of the present invention shall fall within the protection scope of the present invention.

It should be noted that the terms "comprising" and "having" and any variation thereof in the embodiments of the present invention and the attached drawings are intended to cover non-exclusive inclusion. For example, processes, methods, systems, products or devices that include a series of steps or units are not limited to the listed steps or units, but alternatively further include unlisted steps or units, or alternatively further include other steps or units inherent to these processes, methods, products or devices.

The embodiments of the present invention disclose a layering method and apparatus for point cloud data, a device, a medium and a vehicle. The following makes descriptions in detail respectively.

Embodiment 1

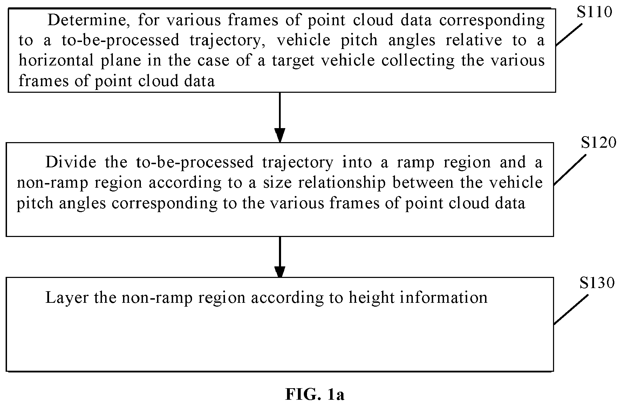

FIG. 1a is a flow chart of a layering method for point cloud data provided by embodiment 1 of the present invention. The method may be applied to an on-board computer, an industrial personal computer (IPC) and other vehicle terminals, and may be applied to a server as well, which is not limited by the embodiment of the present invention. The method provided by this embodiment may be applied to the layering process of the point cloud data in a scene of an elevated bridge, a parking lot, particularly, an underground parking lot, and the like; and a layering result may be used for map creating, vehicle positioning or the like. The method provided by this embodiment may be implemented by a layering apparatus for point cloud data. The apparatus may be implemented in a manner of software and/or hardware.

As shown in FIG. 1a, the method provided by this embodiment specifically includes:

S 110, Determining, for various frames of point cloud data corresponding to a to-be-processed trajectory, vehicle pitch angles relative to a horizontal plane in the case of a target vehicle collecting the various frames of point cloud data,

where the to-be-processed trajectory is a trajectory generated by the target vehicle driving in a target scene and includes a plurality of trajectory points ordered chronologically. The point cloud data is those observed by the target vehicle at each trajectory point corresponding to the target scene, where the target scene may be the elevated bridge, the parking lot, particularly, the underground parking lot, and the like. The target vehicle may be a map collecting vehicle, on which various sensor devices are mounted.

Exemplarily, there are may obtaining manners of the point cloud data, for example, the point cloud data may be collected by a ranging sensor (for example, a radar, a laser scanner or the like) arranged on the target vehicle; or an image of each trajectory point may be collected using an image collecting apparatus (for example, a depth camera, a binocular camera or the like) arranged on the target vehicle as well, and then the point cloud data of various trajectory points are obtained based on the images of the various trajectory points. The embodiment of present invention does not limit the specific obtaining manner of the point cloud data; and any manner capable of obtaining the point cloud data observed at each trajectory point corresponding to the target scene may be applied to the embodiment of present invention.

It is understood that there is an obvious difference in vehicle attitude between cases of the vehicle driving on a ramp section and a non-ramp section. In the case of the vehicle driving on the non-ramp section, the vehicle attitude is parallel to the horizontal plane; and in the case of the vehicle driving on the ramp section, there will be a certain included angle between the vehicle attitude and the horizontal plane. In this embodiment, the included angle may be represented by a pitch angle of the vehicle attitude.

In this embodiment, there are many manners of determining the vehicle pitch angles relative to the horizontal plane in the case of the target vehicle collecting the various frames of point cloud data. As an alternative implementation mode, a standard coordinate system characterizing the horizontal plane may be selected first, and may be a coordinate system established with a point in a local horizontal plane as an origin and the horizontal plane as an xoy plane. Specifically, the standard coordinate system may be an east-north-up (ENU) coordinate system. In this embodiment, an initial pitch angle of the vehicle relative to the standard coordinate system may be obtained according to relative relationship between the vehicle body coordinate system and the standard coordinate system, where the vehicle body coordinate system is defined on a vehicle body, and is a coordinate system fixedly connected with the vehicle body, for example, the vehicle body coordinate system may be defined at a center of a rear axle of the vehicle body; and if the vehicle is located in the horizontal plane, the vehicle body coordinate system may be horizontality as well.

As another alternative implementation mode, as an inertial measurement unit (IMU) may perceive a direction of gravity, the initial vehicle pitch angle of the vehicle attitude relative to the horizontal plane in the case of the target vehicle collecting the various frames of point cloud data may be determined by the IMU.

As another alternative implementation mode, the vehicle attitude may be determined based on data fused by a plurality of sensors, and then the initial vehicle pitch angle of the attitude relative to the horizontal plane is determined, where the plurality of sensors may include the IMUs, global positioning systems (GPS), radars and/or image sensors.

Further, after the initial vehicle pitch angle of the vehicle attitude is obtained, the initial vehicle pitch angle may be filtered, so as to solve interference caused by a minor jitter of the vehicle during driving, and then improve the accuracy of the vehicle pitch angles.

Exemplarily, there are may filtering methods, for example, a mean filtering manner may be used, specifically, for the initial vehicle pitch angle corresponding to the current frame of point cloud data, mean filtering is performed on the initial vehicle pitch angle corresponding to the current frame of point cloud data through the vehicle pitch angles corresponding to a front frame of point cloud data and a next frame of point cloud data; and a pitch angle value obtained after mean filtering serves as the vehicle pitch angle corresponding to the current frame of point cloud data. The mean filtering process may be represented by the following equation:

$$p[i](next) = (p[i-2] + p[i-1] + p[i](front) + p[i+1] + p[i+2])/5;$$

where i represents an index value of the current frame of point cloud data; p[i](front) represents the vehicle pitch angle corresponding to the current frame of point cloud data before filtering; and p[i](next) represents the vehicle pitch angle corresponding to the current frame of point cloud data after filtering.

In addition to mean filtering, a Gaussian filtering manner, a median filtering manner or the like may be used for filtering the vehicle pitch angle corresponding to each frame of point cloud data. The embodiment does not specifically limit the filtering manner.

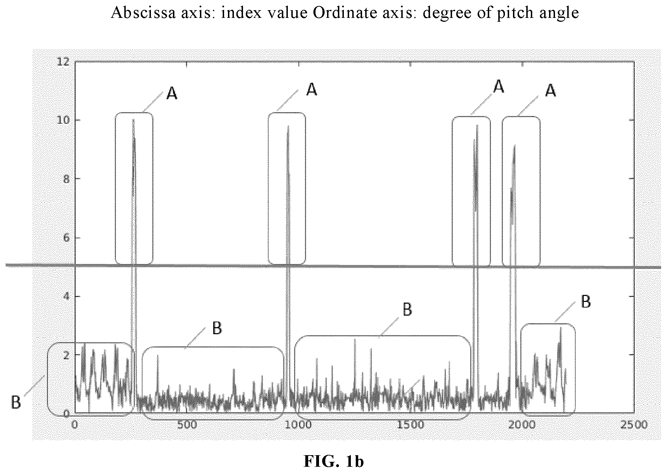

In this embodiment, whether the target vehicle drives in a ramp section or a non-ramp section may be determined based on different vehicle pitch angles in the case of the vehicle driving on the ramp section and the non-ramp section. FIG. 1b is a relationship schematic diagram between vehicle pitch angles and point cloud frame number index values provided by embodiment 1 of the present invention. as shown in FIG. 1b, an abscissa represents a point cloud frame number index; and an ordinate represents a vehicle pitch angle. A value variation range of the pitch angles in four peak regions A outlined in the drawing is relatively large, corresponding to the pitch angles of the vehicle driving in the ramp section, where the ramp section may be that the vehicle drives from a section at a higher layer to a section at a lower layer, or from a section at a lower higher layer to a section at a higher layer. A value variation range of the pitch angles in regions B outlined in FIG. 1b is relatively small, corresponding to the non-ramp section. As the vehicle pitch angle corresponding to the ramp section varies in the range with larger values, and the vehicle pitch angle corresponding to the non-ramp section varies in the range with smaller values, in this embodiment, a driving trajectory corresponding to the ramp section may be determined by calculating the vehicle pitch angles relative to the horizontal plane in the case of the target vehicle collecting the various frames of point cloud data; that is, a trajectory corresponding to each peak region A shown in FIG. 1b is found out, and then the trajectory corresponding to the non-ramp region in the to-be-processed trajectory may be determined, which is the trajectory corresponding to each region B as shown in FIG. 1b.

S120, dividing the to-be-processed trajectory into a ramp region and a non-ramp region according to a size relationship between the vehicle pitch angles corresponding to the various frames of point cloud data.

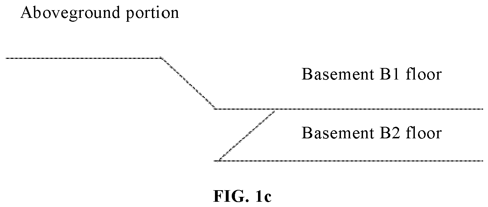

It is understood that as there is a certain difference of elevation between different sections in the case of the vehicle driving in the sections at different heights, a transition may be made between different sections through a slope usually, that is, the sections at different heights communicate with each other through a ramp usually. For example, FIG. 1c is a lateral view of a basement trajectory provided by embodiment 1 of the present invention; As shown in FIG. 1c, in the case of the vehicle driving into a garage at basement B1 floor from an aboveground pavement, or driving onto the aboveground pavement from the garage at the basement B1 floor, or driving into a garage at basement B2 floor from the garage at the basement B1 floor, the vehicle may pass through a slope section. In the case of the vehicle driving in the non-ramp section, the vehicle attitude is parallel to the horizontal plane; and the value of the vehicle pitch angle may vary in the value range with the smaller values usually. In the process that the vehicle starts to drive into the ramp section, drives on the ramp section and then drives out of the ramp section, the value of the vehicle pitch angle may vary in the value range with the larger values usually. Based on the above principle, whether the vehicle drives in the ramp region or the non-ramp region may be determined according to the size relationship between the vehicle pitch angles corresponding to the various frames of point cloud data.

As an alternative implementation mode, an angle may be preset as a critical angle of the vehicle in the non-ramp region and the ramp region, where the preset angle may be determined according to empirical values of the pitch angles of the vehicle driving in the non-ramp section and the ramp section for many times. For example, in the case of the vehicle driving across layers, as shown in FIG. 1b, the vehicle pitch angle may vary between 5° and 10°. In this embodiment, the preset angle may be set as 5°.

In this embodiment, the point cloud data corresponding to those of the vehicle pitch angles larger than a preset angle in the various frames of point cloud data may serve as first point cloud data of the target vehicle driving uphill or downhill. Due to the non-ramp regions at different heights being connected with each other through the ramp regions, and the continuity of the to-be-processed trajectory, after the first point cloud data corresponding to the ramp region is determined, a to-be-processed trajectory corresponding to a set of all second point cloud data can control addition to the first point cloud data may serve as the non-ramp region.

S130, layering the non-ramp region according to height information.

In this embodiment, as each to-be-processed trajectory includes a plurality of trajectory points ordered chronologically, after the ramp region is determined according to the vehicle pitch angles; and the to-be-processed trajectory may be divided into a plurality of sub-regions in a chronological order, i.e. a non-ramp sub-region, a ramp sub-region, a non-ramp sub-region, a ramp sub-region and the like, where a point cloud frame number corresponding to the each sub-region is consecutive. In the case of the vehicle driving in the sections at different heights back and forth, for example, driving from a section at a higher layer to a section at a lower layer and then from a section at a lower higher layer to a section at a higher layer again, the non-ramp region in each to-be-processed trajectory includes a plurality of non-ramp sub-regions with a same height value.

As an alternative implementation mode, the non-ramp sub-regions with average height values in the set range may serve as a non-ramp pavement region in the same layer according to the average height values of the non-ramp sub-regions, thereby dividing the non-ramp region into a plurality of layers, where the average height values of the non-ramp sub-regions may be determined according to vehicle height information corresponding to each point cloud frame, where the vehicle height information may be obtained through the GPS.

Specifically, the non-ramp region may be divided into a plurality of non-ramp sub-regions according to the continuity between the point cloud frame numbers of various sub-regions. By calculating average heights of the non-ramp sub-regions, and clustering the various non-ramp sub-regions according to the average heights, the non-ramp region with the same height information may be obtained; that is, sections, where the vehicle drives in different time period, at the same height are clustered together, where a clustering height may be set as 2 m. After the non-ramp sub-regions at the same height is clustered, the non-ramp region may be divided into a plurality of layers in an order of the average height information of different non-ramp sub-regions from large to small. Compared with a manner in the related art of layering the point cloud data through plane fitting and division on the to-be-processed trajectory, due to the situation that a pavement is not completely horizontal, so as to be easily fitted into a plurality of layers, this embodiment does not focus on whether a pavement corresponding to the non-ramp region in each layer is horizontal in the layering process, and has no need for considering whether point cloud data in other planes is used during plane fitting either. Therefore, the point cloud data layering solution provided by this embodiment effectively improves the accuracy of point cloud data layering.

In this embodiment, a difference between vehicle attitudes in the case of the vehicle driving on the ramp pavement and the non-ramp pavement is taken into consideration; the to-be-processed trajectory may be divided into the ramp region and the non-ramp region by determining the pitch angles for characterizing the vehicle attitudes according to different vehicle pitch angles in the case of the vehicle driving on the ramp section and the non-ramp section; and then the non-ramp region is layered. Compared with a manner in the related art of layering the point cloud data through plane fitting and division on the to-be-processed trajectory, the technical solution provided by this embodiment solves the problem of dividing the point cloud data at different layers into the point cloud data in a same layer, improves the layering accuracy of the point cloud data, and then facilitates an improvement on the making accuracy of subsequent high-definition maps.

Embodiment 2

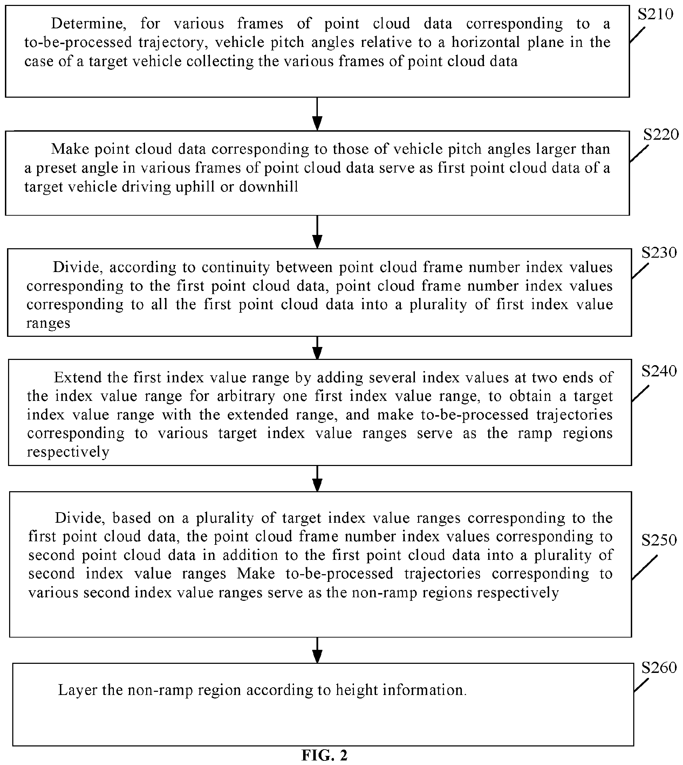

FIG. 2 is a flow chart of a layering method for point cloud data provided by embodiment 2 of the present invention. On the basis of the above embodiment, this embodiment refines the specific division process of the ramp region and the non-ramp region. As shown in FIG. 2, the method provided by this embodiment includes:

S210, Determining, for various frames of point cloud data corresponding to a to-be-processed trajectory, vehicle pitch angles relative to a horizontal plane in the case of a target vehicle collecting the various frames of point cloud data,

where the specific implementation manner of step S210 may refer to the description in the above embodiment, and shall not be described any further.

S220, making the point cloud data corresponding to those of the vehicle pitch angles larger than a preset angle in the various frames of point cloud data serve as first point cloud data of the target vehicle driving uphill or downhill.

In this embodiment, when the first point cloud data of the target vehicle in the case of driving uphill or downhill and the second point cloud data corresponding to the non-ramp region in addition to the first point cloud data are determined, the point cloud frame number index values corresponding to the first point cloud data and the point cloud frame number index values corresponding to the second point cloud data may be stored.

S230, dividing, according to continuity between point cloud frame number index values corresponding to the first point cloud data, the point cloud frame number index values corresponding to all the first point cloud data into a plurality of first index value ranges.

In this embodiment, the situation that the non-ramp sections at different heights communicate with each other through the ramp sections is taken into consideration. Therefore, the ramp sections may be determined first; and then the non-ramp sections, communicating back and forth, at different heights may be divided based on the ramp sections.

Specifically, as the point cloud frame number index values belonging to one ramp region is consecutive, the point cloud frame number index values corresponding to all the first point cloud data may be divided into a plurality of first index value ranges according to the continuity between the point cloud frame number index values corresponding to the first point cloud data, where the number of the first index value ranges is used for representing the number of times of the target vehicle driving uphill or downhill. For example, as shown in FIG. 1b, in the case of driving uphill or downhill for 4 times, the index values stored in step S220 may be divided into 4 group, for example, [245, 283], [996, 1020], [1642, 1666] and [1883, 1910].

S240, extending the first index value range by adding several index values at two ends of the index value range for arbitrary one first index value range, to obtain a target index value range with the extended range, and making to-be-processed trajectories corresponding to various target index value ranges serve as the ramp regions respectively.

In this embodiment, step S220 is to preliminarily divide the various frames of point cloud data into the first point cloud data corresponding to the ramp region and the second point cloud data corresponding to the non-ramp region according to a relationship between the vehicle pitch angle corresponding to each frame of point cloud data and the preset angle. As shown in FIG. 1b, beyond the first index value ranges, there is still some point cloud data belonging to this ramp range. Therefore, in order to make the various first index value ranges more comprehensively cover the point cloud frame data, to more accurately determine the point cloud data corresponding to the ramp region, this embodiment may extend each first index value range corresponding to the first point cloud data.

Exemplarily, the first index value range may be extended by adding a set number of index values at the two ends of each first index value range, so as to obtain a target index value range with the extended range; and to-be-processed trajectories corresponding to various target index value ranges serve as the ramp regions respectively.

Exemplarily, the first index value range may be extended by adding index values according with the monotonously increasing character at the two ends of each first index value range based on the monotonously increasing character of vehicle heights in the case of the target vehicle driving uphill, so as to obtain the target index value range with the extended range. Or, the first index value range may be extended by adding index values according with the monotonously decreasing character at the two ends of each first index value range based on the monotonously increasing character of vehicle heights in the case of the target vehicle driving uphill, so as to obtain the target index value range with the extended range.

In this embodiment, the step of extending the first index value range by adding index values according with monotonicity at two ends of the index value range respectively according to the monotonicity between height information, corresponding to various index values in the first index value range, of the target vehicle includes:
determining an intermediate index value corresponding to a middle portion of a ramp in the first index value range, and determining various height difference absolute values between target vehicle height information corresponding to the intermediate index value and target vehicle height information corresponding to other index values; and determining to-be-added index values at the two ends of the index value range according to the monotonously increasing character between the various height difference absolute values of the vehicle during ramp driving, and forming, by combining the to-be-added index values with the index values in the original index value range, the target index value range with the extended range according to the size relationship between the index values.

Specifically, end point values at the two ends of each first index value range are added to obtain a sum, and a half of the sum may serve as the intermediate index value corresponding to the middle portion of the ramp. For example, for the above first index value range [245, 283], the corresponding intermediate index value is: (245+283)/2 = 264. After the intermediate index value is determined, extension may be made from the middle portion of the ramp to the two sides respectively, for example, forward extension is made from frame 264, and then other index values smaller than the intermediate index value are judged, for example, whether height difference absolute values between height information, corresponding to frame 263, frame 262, frame 261 and other point cloud frames, of the target vehicle and height information corresponding to frame 264 accord with the monotonously increasing character is judged; and the index values according with the monotonously increasing character serve as the index values in the target index value range. In the case that the height difference absolute values between the height information corresponding to the extended point cloud frames and the height information corresponding to the intermediate point cloud frame does not accord with the monotonously increasing character, it shows to extend to one end of the ramp. At this time, it may extend to other end based on the intermediate index value, for example, other index values larger than the intermediate index value are judged, for example, whether height difference absolute values between height information, corresponding to frame 265, frame 266, frame 267 and other point cloud frames, of the target vehicle and the height information corresponding to the frame 264 accord with the monotonously increasing character is judged; and the index values according with the monotonously increasing character serve as the index values in the target index value range. In the case that the height difference absolute values between the height information corresponding to the extended point cloud frames and the height information corresponding to the intermediate point cloud frame does not accord with the monotonously increasing character, it is determined to extend to the other end of the ramp. According to the above manner, the to-be-added index values at the two ends of the original first index value range may be determined, so that the target index value range with the extended range is formed by combining the to-be-added index values with the index values in the original first index value range, to obtain index values corresponding to a complete ramp region, for example, after the range [245, 283] is extended, the obtained range is [220, 295].

S250, dividing, based on a plurality of target index value ranges corresponding to the first point cloud data, the point cloud frame number index values corresponding to the second point cloud data in addition to the first point cloud data into a plurality of second index value ranges, and making to-be-processed trajectories corresponding to various second index value ranges serve as the non-ramp regions respectively.

As the target vehicle may pass through an uphill or downhill section for many times in the driving process, after all the first point cloud data corresponding to the ramp region is divided into a plurality of groups according to the continuity between the point cloud frame number index values, that is, after the target index value ranges corresponding to the plurality of ramp sections in the to-be-processed trajectory are determined, the to-be-processed trajectory may be divided into a plurality of sections (which are sequentially: non-ramp section, ramp section, non-ramp section, ramp section, non-ramp section and so on) based on each target index value range, where the number of the ramp sections determined in this embodiment represents the number of times of the target vehicle driving uphill or downhill.

In this embodiment, the point cloud frame number index values corresponding to the second point cloud data in addition to the first point cloud data may be divided into a plurality of second index value ranges according to the continuity between the point cloud frame number index values, that is, the index value ranges for the point cloud data belonging to the non-ramp region are determined.

Specifically, for the target index value ranges [220, 295] and [971, 1034] obtained by extending the first index value ranges, based on the continuity between the point cloud frame number index values and the principle that the non-ramp regions communicate with each other through the ramp regions, the to-be-processed trajectory may be divided into [0, 219], [220, 295], [296, 970] and [971, 1034] (referring to following Table 1 specifically), where the second index value ranges corresponding to the non-ramp sub-regions are: [0, 219] and [296, 970].

Table 1 Region Division Table

| Non-ramp sub-region | Ramp sub-region | Non-ramp sub-region | Ramp sub-region | . . . . . . |
|---|---|---|---|---|
| [0, 219] | [220,295] | [296,970] | [971, 1034] | . . . . . . |

S260, layering the non-ramp region according to height information.
where the specific layering manner of step S260 may refer to the description in the above embodiment, and shall not be described any further.

In this embodiment, for the first index value range, corresponding to the ramp region, obtained by preliminary division according to the vehicle pitch angles, by extending the first index value range, the target index value range obtained after extension more comprehensively covers the point cloud frame data, thereby improving the accuracy of ramp region division. During extension, by determining all the point cloud frame data according to the monotonicity of the vehicle height information of the vehicle driving in the ramp region, the extended target index value range can correspond to one finished ramp, thereby effectively improving the determining precision of the ramp region and further the determining precision of the non-ramp region.

Embodiment 3

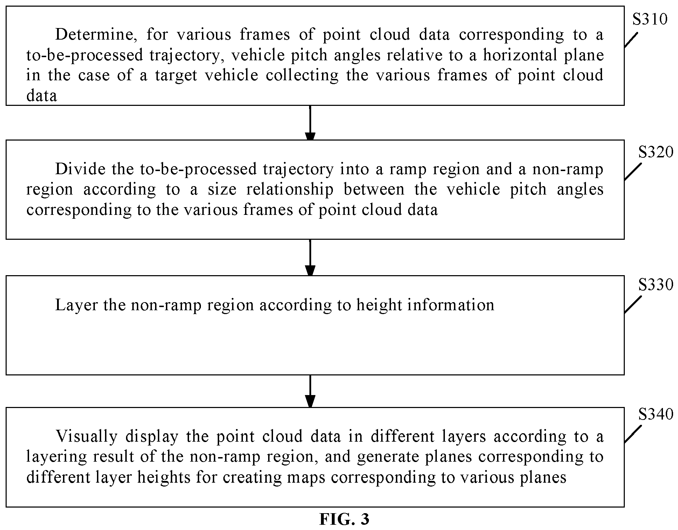

FIG. 3 is a flow chart of a layering method for point cloud data provided by embodiment 3 of the present invention. On the basis of the above embodiment, this embodiment provides an application method for point cloud data, as shown in FIG. 3,

S310, Determining, for various frames of point cloud data corresponding to a to-be-processed trajectory, vehicle pitch angles relative to a horizontal plane in the case of a target vehicle collecting the various frames of point cloud data,
S320, dividing the to-be-processed trajectory into a ramp region and a non-ramp region according to a size relationship between the vehicle pitch angles corresponding to the various frames of point cloud data.
S330, layering the non-ramp region according to height information.
where the specific implementation manner of steps S310-S330 may refer to the description in the above embodiment, and shall not be described any further.
S340, visually displaying the point cloud data in different layers according to a layering result of the non-ramp region, and generating planes corresponding to different layer heights for creating maps corresponding to the various planes,
where the layering result of the non-ramp region may include: a number of layers of the non-ramp region in the to-be-processed trajectory, average height information corresponding to the point cloud frame data in each layer and an index value range for the point cloud data in each layer.

In this embodiment, in order to effectively divide the point cloud data at different layer heights, the point cloud data at different layer heights may be visually displayed. Specifically, the point cloud data at different layer heights may be represented by different colors, or different shapes, which is not limited in this embodiment. When maps are created, in order to the improve the production efficiency, different operators may make maps for the point cloud data at different layer heights respectively.

Specifically, when the maps for corresponding layer heights are created using various layers of point cloud data, plane fitting may be performed on the point cloud data in each layer based on a preset plane fitting algorithm, to obtain a corresponding plane, where the preset plane fitting algorithm may be a plane fitting algorithm using a plane extraction technology based on random sample consensus (RANSAC), may further be a plane fitting algorithm based on a least square method and the like. After plane fitting is completed, points in the plane may be colored. Specifically, the various frames of point cloud data may be projected under a pixel coordinate system, and to-be-colored point clouds are endowed with colors of pixel points obtained by projection, to color all map elements in the plane, thereby obtaining maps corresponding to various planes. Similarly, a map may further be made for the ramp region according to a map creation manner corresponding to the non-ramp region, so as to obtain a map containing the ramp region and the non-ramp region in a scene of a parking lot and the like.

Further, during autonomous vehicle driving, in an application scene of the elevated bridge, the parking lot and the like, the vehicle may be positioned based on the created high-definition map; and the to-be-processed trajectory used for mapping may be layered using the layering method for the point cloud data provided by the embodiment of the present invention, and then the high-definition map is layered, to obtain information about a number of layers where the vehicle is currently located.

In the technical solution provided by this embodiment, the point cloud data at different layer heights may be visually displayed using the layering result of the point cloud data; and different operators may make maps for different layers, the mapping efficiency is improved, where a created map may be applied to a positioning process of the vehicle, and provides information about a number of layers of a pavement where the autonomous vehicle is currently located for the autonomous vehicle.

Embodiment 4

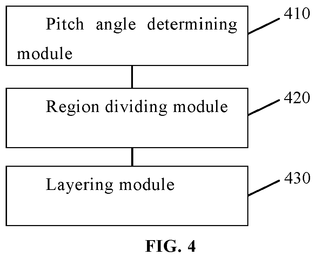

FIG. 4 is a structural block diagram of a layering apparatus for point cloud data provided by embodiment 4 of the present invention. As shown in FIG. 4, the apparatus includes a pitch angle determining module 410, a region dividing module 420 and a layering module 430, where

a pitch angle determining module 410, configured to determine, for various frames of point cloud data corresponding to a to-be-processed trajectory, vehicle pitch angles relative to a horizontal plane in the case of a target vehicle collecting various frames of point cloud data;

a region dividing module 420, configured to divide the to-be-processed trajectory into a ramp region and a non-ramp region according to a size relationship between the vehicle pitch angles corresponding to the various frames of point cloud data; and

a layering module 430, configured to layer the non-ramp region according to height information.

Optionally, the apparatus provided by the embodiment of the present invention further includes:
a mapping module, configured to visually display the point cloud data in different layers according to a layering result of the non-ramp region after layering each non-ramp region according to the height information, and generating planes corresponding to different layer heights for creating maps corresponding to the various planes.

Optionally, the region dividing module 420 includes:

a point cloud data dividing unit, configured to make the point cloud data corresponding to those of the vehicle pitch angles larger than a preset angle in the various frames of point cloud data serve as first point cloud data of the target vehicle driving uphill or downhill; and

a region dividing unit, configured to make a to-be-processed trajectory corresponding to a set of all the first point cloud data serve as the ramp region, and making a to-be-processed trajectory corresponding to a set of all second point cloud data in addition to the first point cloud data serve as the non-ramp region.

Optionally, the region dividing unit includes:

an index value range determining sub-unit, configured to divide, according to continuity between point cloud frame number index values, the point cloud frame number index values corresponding to all the first point cloud data into a plurality of first index value ranges, where the number of the first index value ranges is used for representing the number of times of the target vehicle driving uphill or downhill;

a ramp region determining sub-unit, configured to extend the first index value range by adding several index values at two ends of the index value range for arbitrary one first index value range, to obtain a target index value range with the extended range, and making to-be-processed trajectories corresponding to various target index value ranges serve as the ramp regions respectively; and

a non-ramp region determining sub-unit, configured to divide, based on a plurality of target index value ranges corresponding to the first point cloud data and the continuity, the point cloud frame number index values corresponding to the second point cloud data in addition to the first point cloud data into a plurality of second index value ranges, and make to-be-processed trajectories corresponding to various second index value ranges serve as the non-ramp regions respectively.

Optionally, the ramp region determining sub-unit includes:
a ramp region determining assembly, configured to extend the first index value range by adding index values according with monotonicity at two ends of the index value range respectively according to the monotonicity between height information, corresponding to various index values in the first index value range, of the target vehicle for arbitrary one first index value range, to obtain the target index value range with the extended range, and make to-be-processed trajectories corresponding to various target index value ranges serve as the ramp regions respectively, where the monotonicity includes a monotonously increasing character or a monotonously decreasing character.

Optionally, the ramp region determining assembly is specifically configured to:

determine, for arbitrary one first index value range, an intermediate index value corresponding to a middle portion of a ramp in the first index value range;
determine various height difference absolute values between height information, corresponding to the intermediate index value, of the target vehicle and height information, corresponding to the other index values in the first index value range, of the target vehicle;
determine to-be-added index values at the two ends of the first index value range according to the monotonously increasing character between the various height difference absolute values of the vehicle during ramp driving; and
form, by combining the to-be-added index values with the index values in the original first index value range, the target index value range with the extended range according to the size relationship between the index values, and make to-be-processed trajectories corresponding to various target index value ranges serve as the ramp regions respectively.

Optionally, each vehicle pitch angle is a filtered vehicle pitch angle.

Optionally, the layering module 430 includes:

a sub-region determining unit, configured to determine sub-regions with same average height information in the non-ramp region, where point cloud frame number index values corresponding to the each sub-region are consecutive; and
a layering unit, configured to divide the non-ramp region into a plurality of layers in an order of the average height information of different sub-regions from large to small.

Optionally, the pitch angle determining module 410 is specifically configured to:

determine, based on a relative relationship between a vehicle body coordinate system and a standard coordinate system, the vehicle pitch angles relative to a horizontal plane in the case of the target vehicle collecting the various frames of point cloud data, where the vehicle body coordinate system is a coordinate system fixedly connected with a vehicle body, and the standard coordinate system is a coordinate system corresponding to the horizontal plane; or
determine, based on data collected by an inertial measurement unit (IMU), the vehicle pitch angles relative to the horizontal plane in the case of the target vehicle collecting the various frames of point cloud data; or
determine, based on data fused by a plurality of sensors, the vehicle pitch angles relative to the horizontal plane in the case of the target vehicle collecting the various frames of point cloud data, where the plurality of sensors include the IMUs, global positioning systems (GPS), radars and/or image sensors.

The layering apparatus for the point cloud data provided by the embodiment of the present invention may implement the layering method for the point cloud data provided by any embodiment of the present invention, and has corresponding functional modules and beneficial effects for implementing the method. The technical details not exhaustively described in the above embodiments may refer to the layering method for the point cloud data provided by any embodiment of the present invention.

Embodiment 5

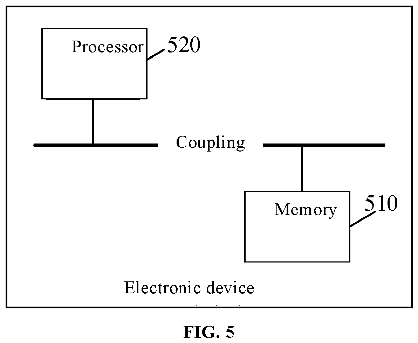

FIG. 5 is a structural block diagram of an electronic device provided by embodiment 5 of the present invention. As shown in FIG. 5, the electronic device includes:

a memory 510 storing executable program codes; and
a processor 520, coupled to the memory 510,
where the processor 520 calls the executable program codes stored in the memory 510, to implement the layering method for the point cloud data provided by any embodiment of the present invention.

Based on the above embodiments, another embodiment of the present application provides a vehicle, the vehicle including the apparatus described in any one of the above embodiments or including the electronic device described above.

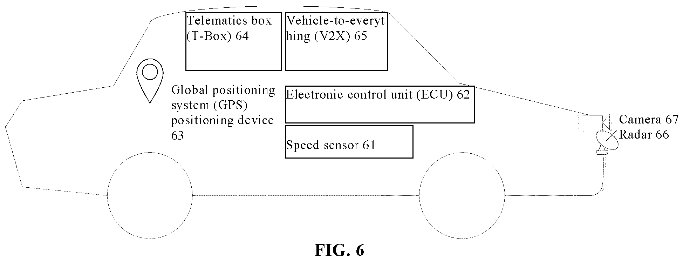

Fig. 6 is a schematic diagram of a vehicle provided by embodiment 5 of the present invention. As shown in FIG. 6, the vehicle includes a speed sensor 61, an electronic control unit (ECU) 62, a global positioning system (GPS) positioning device 63, and a telematics box (T-Box) 64, where the speed sensor 61 is used to measure a speed of the vehicle, and the speed of the vehicle is used as an empirical speed for model training; the GPS positioning device 63 is used to obtain a current geographical position of the vehicle; the T-Box 64 may be used as a gateway to communicate with a server; and the ECU 62 may implement the above layering method for the point cloud data.

In addition, the vehicle may also include: a vehicle-to-everything (V2X) module 65, a radar 66 and a camera 67. The V2X module 65 is used to communicate with other vehicles, roadside devices, etc.; the radar 66 or the camera 67 is used to perceive road environment information in front and/or other directions, to obtain original point cloud data; and the radar 66 or the camera 67 may be configured in the front and/or rear of the vehicle body.

Based on the above method embodiments, another embodiment of the present invention provides a storage medium having executable instructions stored thereon. The instructions, when executed by the processor, enable the processor to implement the layering method for the point cloud data described in any one of the above implementation modes.

It should be understood that, in various embodiments of the present invention, the values of the serial numbers of the above-mentioned processes do not mean the order of execution, and the order of execution of each process should be determined by its functions and internal logic instead of any limitation on the implementation process of the embodiments of the present invention.

In the embodiments provided by the present invention, it should be understood that "B corresponding to A" represents that B is associated with A, and may be determined according to A. However, it should further be understood that determining B according to A does not mean that B is determined according to A only, and may further be determined according to A and/or other information.

In addition, various functional units in various embodiments of the present invention may be integrated in one processing unit, or each unit may exist individually and physically, or two or more units may be integrated in one unit. The integrated units may be implemented in a form of hardware, and may also be implemented in a form of a software function unit.

If implemented in the form of the software functional unit, and sold or used as an independent product, the integrated units may be stored in a computer-available memory. Based on this understanding, the technical solution of the present invention, in essence or from the view of part contributing to the prior art, or all or part of the technical solution may be embodied in the form of a software product; and the computer software product is stored in the memory and includes a plurality of requests which are used to enable a computer device (which may be a personal computer, a server, or a network device, etc.) to implement all or part of the steps of the methods described in the various embodiments of the present invention.

It may be understood by those skilled in the art that all or a portion of the steps for implementing the various methods of the above embodiments may be completed by instructing related hardware through the programs, which may be stored in the computer-readable storage medium. The storage medium includes a read only memory (ROM), a random access memory (RAM), a programmable read-only memory (PROM), an erasable programmable read only memory (EPROM), a one-time programmable read-only memory (OTPROM), an electrically erasable programmable read only memory (EEPROM), a compact disc read only memory (CD-ROM) or other optical disk storage, a magnetic disk storage, a magnetic tape storage, or any other computer-readable media that can be used to carry or store data.

Those of ordinary skills in the art should understand that the attached drawings are merely schematics of an embodiment, the modules or processes in the attached drawings are not necessary for implementation of the present invention.

Those of ordinary skills in the art should understand that the modules in the device of the embodiment may be distributed in the device of the embodiment as described in the embodiment, or may be correspondingly changed to be located in one or more devices different from the embodiment. The modules in the above embodiment may be combined into one module or may be further divided into multiple sub-modules.

Finally, it should be noted that the above embodiments are merely used for illustration of the technical solutions of the present invention, but not limit them. Although the present invention has been described in detail with reference to the foregoing embodiments, those of ordinary skills in the art should understand that: the technical solutions described in the foregoing embodiments may still be modified, or equivalent substitutions to some of the technical features may be performed. However, these modifications or substitutions do not make the essence of the corresponding technical solutions deviate from the spirit and scope of the technical solutions of the embodiments of the present invention.

**Claims**

1. A layering method for point cloud data, comprising:

   determining, for various frames of point cloud data corresponding to a to-be-processed trajectory, vehicle pitch angles relative to a horizontal plane in the case of a target vehicle collecting the various frames of point cloud data;
   dividing the to-be-processed trajectory into a ramp region and a non-ramp region according to a size relationship between the vehicle pitch angles corresponding to the various frames of point cloud data; and
   layering the non-ramp region according to height information.

2. The method according to claim 1, wherein after the layering the non-ramp region according to height information, the method further comprises:
   visually displaying the point cloud data in different layers according to a layering result of the non-ramp region, and generating planes corresponding to different layer heights for creating maps corresponding to the various planes.

3. The method according to claim 1, wherein the dividing the to-be-processed trajectory into a ramp region and a non-ramp region according to a size relationship between the various frames of point cloud data and the corresponding vehicle pitch angles comprises:

   making the point cloud data corresponding to those of the vehicle pitch angles larger than a preset angle in the various frames of point cloud data serve as first point cloud data of the target vehicle driving uphill or downhill; and making a to-be-processed trajectory corresponding to a set of all the first point cloud data serve as the ramp region, and making a to-be-processed trajectory corresponding to a set of all second point cloud data in addition to the first point cloud data serve as the non-ramp region.

4. The method according to claim 3, wherein the making a to-be-processed trajectory corresponding to a set of all the first point cloud data serve as the ramp region, and making a to-be-processed trajectory corresponding to a set of all second point cloud data in addition to the first point cloud data serve as the non-ramp region comprises:

   dividing, according to continuity between point cloud frame number index values, the point cloud frame number index values corresponding to all the first point cloud data into a plurality of first index value ranges, wherein the number of the first index value ranges is used for representing the number of times of the target vehicle driving uphill or downhill;
   extending the first index value range by adding several index values at two ends of the index value range for arbitrary one first index value range, to obtain a target index value range with the extended range, and making to-be-processed trajectories corresponding to various target index value ranges serve as the ramp regions respectively; and
   dividing, based on a plurality of target index value ranges corresponding to the first point cloud data and the continuity, the point cloud frame number index values corresponding to the second point cloud data in addition to the first point cloud data into a plurality of second index value ranges, and making to-be-processed trajectories corresponding to various second index value ranges serve as the non-ramp regions respectively.

5. The method according to claim 4, wherein the extending the first index value range by adding several index values at two ends of the index value range, to obtain a target index value range with the extended range comprises:
   extending the first index value range by adding index values according with monotonicity at two ends of the index value range respectively according to the monotonicity between height information, corresponding to various index values in the first index value range, of the target vehicle, to obtain the target index value range with the extended range, wherein the monotonicity comprises a monotonously increasing character or a monotonously decreasing character.

6. The method according to claim 5, wherein the extending the first index value range by adding index values according with monotonicity at two ends of the index value range respectively according to the monotonicity between height information, corresponding to various index values in the first index value range, of the target vehicle, to obtain the target index value range with the extended range comprises:

   determining an intermediate index value corresponding to a middle portion of a ramp in the first index value range;
   determining various height difference absolute values between height information, corresponding to the intermediate index value, of the target vehicle and height information, corresponding to the other index values in the first index value range, of the target vehicle;

determining to-be-added index values at the two ends of the first index value range according to the monotonously increasing character between the various height difference absolute values of the vehicle during ramp driving; and

forming, by combining the to-be-added index values with the index values in the original first index value range, the target index value range with the extended range according to the size relationship between the index values.

7. The method according to claim 3, wherein each vehicle pitch angle is a filtered vehicle pitch angle.

8. The method according to any one of claims 1 to 7, wherein the layering the non-ramp region according to height information comprises:

determining sub-regions with same average height information in the non-ramp region, wherein point cloud frame number index values corresponding to the each sub-region are consecutive; and

dividing the non-ramp region into a plurality of layers in an order of the average height information of different sub-regions from large to small.

9. The method according to claim 1, wherein the determining vehicle pitch angles relative to a horizontal plane in the case of a target vehicle collecting the various frames of point cloud data comprises:

determining, based on a relative relationship between a vehicle body coordinate system and a standard coordinate system, the vehicle pitch angles relative to a horizontal plane in the case of the target vehicle collecting the various frames of point cloud data, wherein the vehicle body coordinate system is a coordinate system fixedly connected with a vehicle body, and the standard coordinate system is a coordinate system corresponding to the horizontal plane; or

determining, based on data collected by an inertial measurement unit (IMU), the vehicle pitch angles relative to the horizontal plane in the case of the target vehicle collecting the various frames of point cloud data; or

determining, based on data fused by a plurality of sensors, the vehicle pitch angles relative to the horizontal plane in the case of the target vehicle collecting the various frames of point cloud data, wherein the plurality of sensors comprise the IMUs, global positioning systems (GPS), radars and/or image sensors.

10. A layering apparatus for point cloud data, comprising:

a pitch angle determining module, configured to determine, for various frames of point cloud data corresponding to a to-be-processed trajectory, vehicle pitch angles relative to a horizontal plane in the case of a target vehicle collecting various frames of point cloud data;

a region dividing module, configured to divide the to-be-processed trajectory into a ramp region and a non-ramp region according to a size relationship between the vehicle pitch angles corresponding to the various frames of point cloud data; and

a layering module, configured to layer the non-ramp region according to height information.

11. The apparatus according to claim 10, further comprising:

a mapping module, configured to visually display the point cloud data in different layers according to a layering result of the non-ramp region after layering the non-ramp region according to the height information, and generating planes corresponding to different layer heights for creating maps corresponding to the various planes.

12. The apparatus according to claim 10, wherein the region dividing module comprises:

a point cloud data dividing unit, configured to make the point cloud data corresponding to those of the vehicle pitch angles larger than a preset angle in the various frames of point cloud data serve as first point cloud data of the target vehicle driving uphill or downhill; and

a region dividing unit, configured to make a to-be-processed trajectory corresponding to a set of all the first point cloud data serve as the ramp region, and making a to-be-processed trajectory corresponding to a set of all second point cloud data in addition to the first point cloud data serve as the non-ramp region.

13. The apparatus according to claim 12, wherein the region dividing unit comprises:

an index value range determining sub-unit, configured to divide, according to continuity between point cloud frame number index values, the point cloud frame number index values corresponding to all the first point cloud data into a plurality of first index value ranges, wherein the number of the first index value ranges is used for representing the number of times of the target vehicle driving uphill or downhill;

a ramp region determining sub-unit, configured to extend the first index value range by adding several index values at two ends of the index value range for arbitrary one first index value range, to obtain a target index value range with the extended range, and making to-be-processed trajectories corresponding to various target index value ranges serve as the ramp regions respectively; and

a non-ramp region determining sub-unit, configured to divide, based on a plurality of target index value ranges corresponding to the first point cloud data and the continuity, the point cloud frame number index values corresponding to the second point cloud data in addition to the first point cloud data into a plurality of second index value ranges, and make to-be-processed trajectories corresponding to various second index value ranges serve as the non-ramp regions respectively.

14. The apparatus according to claim 13, wherein the ramp region determining sub-unit comprises:

a ramp region determining assembly, configured to extend the first index value range by adding index values according with monotonicity at two ends of the index value range respectively according to the monotonicity between height information, corresponding to various index values in the first index value range, of the target vehicle for arbitrary one first index value range, to obtain the target index value range with the extended range, and make to-be-processed trajectories corresponding to various target index value ranges serve as the ramp regions respectively, wherein the monotonicity comprises a monotonously increasing character or a monotonously decreasing character.

15. The apparatus according to claim 14, wherein the ramp region determining assembly is specifically configured to:

determine, for arbitrary one first index value range, an intermediate index value corresponding to a middle portion of a ramp in the first index value range;

determine various height difference absolute values between height information, corresponding to the intermediate index value, of the target vehicle and height information, corresponding to the other index values in the first index value range, of the target vehicle;

determine to-be-added index values at the two ends of the first index value range according to the monotonously increasing character between the various height difference absolute values of the vehicle during ramp driving; and

form, by combining the to-be-added index values with the index values in the original first index value range, the target index value range with the extended range according to the size relationship between the index values, and make to-be-processed trajectories corresponding to various target index value ranges serve as the ramp regions respectively.

16. The apparatus according to any one of claims 10 to 15, wherein the layering module comprises:

a sub-region determining unit, configured to determine sub-regions with same average height information in the non-ramp region, wherein point cloud frame number index values corresponding to the each sub-region are consecutive; and

a layering unit, configured to divide the non-ramp region into a plurality of layers in an order of the average height information of different sub-regions from large to small.

17. The apparatus according to claim 10, wherein the pitch angle determining module is specifically configured to:

determine, based on a relative relationship between a vehicle body coordinate system and a standard coordinate system, the vehicle pitch angles relative to a horizontal plane in the case of the target vehicle collecting the various frames of point cloud data, wherein the vehicle body coordinate system is a coordinate system fixedly connected with a vehicle body, and the standard coordinate system is a coordinate system corresponding to the horizontal plane; or

determine, based on data collected by an inertial measurement unit (IMU), the vehicle pitch angles relative to the horizontal plane in the case of the target vehicle collecting the various frames of point cloud data; or

determine, based on data fused by a plurality of sensors, the vehicle pitch angles relative to the horizontal plane in the case of the target vehicle collecting the various frames of point cloud data, wherein the plurality of sensors comprise the IMUs, global positioning systems (GPS), radars and/or image sensors.

18. An electronic device, comprising:

one or more processors; and
a storage device, configured to store one or more programs, wherein
when executed by the one or more processors, the one or more programs enable the one or more processors
to implement the method according to any one of claims 1 to 9.

19. A storage medium, having stored thereon a computer program which, when executed by a processor, implements the method in any one of claims 1 to 9.

20. A vehicle, comprising the apparatus according to any one of claims 10 to 17 or comprising the electronic device according to claim 18.

Determine, for various frames of point cloud data corresponding to a to-be-processed trajectory, vehicle pitch angles relative to a horizontal plane in the case of a target vehicle collecting the various frames of point cloud data

S110

Divide the to-be-processed trajectory into a ramp region and a non-ramp region according to a size relationship between the vehicle pitch angles corresponding to the various frames of point cloud data

S120

Layer the non-ramp region according to height information

S130

**FIG. 1a**

Abscissa axis: index value Ordinate axis: degree of pitch angle

FIG. 1b

Aboveground portion

Basement B1 floor

Basement B2 floor

**FIG. 1c**

Determine, for various frames of point cloud data corresponding to a to-be-processed trajectory, vehicle pitch angles relative to a horizontal plane in the case of a target vehicle collecting the various frames of point cloud data

S210

Make point cloud data corresponding to those of vehicle pitch angles larger than a preset angle in various frames of point cloud data serve as first point cloud data of a target vehicle driving uphill or downhill

S220

Divide, according to continuity between point cloud frame number index values corresponding to the first point cloud data, point cloud frame number index values corresponding to all the first point cloud data into a plurality of first index value ranges

S230

Extend the first index value range by adding several index values at two ends of the index value range for arbitrary one first index value range, to obtain a target index value range with the extended range, and make to-be-processed trajectories corresponding to various target index value ranges serve as the ramp regions respectively

S240

Divide, based on a plurality of target index value ranges corresponding to the first point cloud data, the point cloud frame number index values corresponding to second point cloud data in addition to the first point cloud data into a plurality of second index value ranges Make to-be-processed trajectories corresponding to various second index value ranges serve as the non-ramp regions respectively

S250

Layer the non-ramp region according to height information.

S260

**FIG. 2**

Determine, for various frames of point cloud data corresponding to a to-be-processed trajectory, vehicle pitch angles relative to a horizontal plane in the case of a target vehicle collecting the various frames of point cloud data

S310

Divide the to-be-processed trajectory into a ramp region and a non-ramp region according to a size relationship between the vehicle pitch angles corresponding to the various frames of point cloud data

S320

Layer the non-ramp region according to height information

S330

Visually display the point cloud data in different layers according to a layering result of the non-ramp region, and generate planes corresponding to different layer heights for creating maps corresponding to various planes

S340

**FIG. 3**

Pitch angle determining module — 410

Region dividing module — 420

Layering module — 430

**FIG. 4**

**FIG. 5**

**FIG. 6**

## INTERNATIONAL SEARCH REPORT

| International application No. |
| --- |
| **PCT/CN2022/137936** |

**A. CLASSIFICATION OF SUBJECT MATTER**

G06T 17/00(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT; CNKI; DWPI; CNABS; ENTXTC: 点云, 分层, 帧, 数据, 车, 角, 坡, 坡道, 高, 分层, 索引, 平面, 轨迹, point cloud, hierarchy, frame, data, car, angle, slope, ramp, height, index

**C. DOCUMENTS CONSIDERED TO BE RELEVANT**

| Category* | Citation of document, with indication, where appropriate, of the relevant passages | Relevant to claim No. |
| --- | --- | --- |
| A | CN 112991162 A (BEIJING MOMENTA TECHNOLOGY CO., LTD.) 18 June 2021 (2021-06-18)<br>description, paragraphs [0084]-[0147] | 1-20 |
| A | US 2021158547 A1 (BAIDU USA L.L.C.) 27 May 2021 (2021-05-27)<br>entire document | 1-20 |
| A | CN 109685898 A (GUANGZHOU WERIDE TECHNOLOGY CO., LTD.) 26 April 2019 (2019-04-26)<br>entire document | 1-20 |
| A | CN 114295119 A (BEIJING SANKUAI ONLINE TECHNOLOGY CO., LTD.) 08 April 2022 (2022-04-08)<br>entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 February 2023** | **01 March 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/137936**

| Patent document cited in search report | | | Publication date (day/month/year) | Patent family member(s) | | | Publication date (day/month/year) |
|---|---|---|---|---|---|---|---|
| CN | 112991162 | A | 18 June 2021 | None | | | |
| US | 2021158547 | A1 | 27 May 2021 | CN | 112540593 | A | 23 March 2021 |
| CN | 109685898 | A | 26 April 2019 | None | | | |
| CN | 114295119 | A | 08 April 2022 | None | | | |

Form PCT/ISA/210 (patent family annex) (July 2022)